# EUROPÄISCHE PATENTSCHRIFT

(11) **EP 1 362 720 B1**
(45) Veröffentlichungstag und Bekanntmachung des Hinweises auf die Patenterteilung: **21.06.2006**
(21) Anmeldenummer: 03008206.9
(22) Anmeldetag: 08.04.2003
(51) Int. Cl.: B60G 21/055, B60G 17/015

(54) **Kraftfahrzeug, insbesondere Personenkraftwagen, mit einer Wankstabilisierungs-Vorrichtung**
Motor vehicle, especially passenger car, with a device for roll-stabilization
Véhicule automobile, notamment une voiture, avec un dispositif de stabilisation antiroulis

(30) Priorität: 16.05.2002 DE 10221718
(43) Veröffentlichungstag der Anmeldung: 19.11.2003
(73) Patentinhaber: Bayerische Motoren Werke Aktiengesellschaft, 80809 München (DE)
(72) Erfinder: Bogner, Andreas, 80809 München (DE); Wey, Torsten, Dr., 47239 Duisburg (DE); Wimmer, Markus, 83052 Bruckmühl (DE); Webers, Klaus, Dr., 52072 Aachen (DE)

(56) Entgegenhaltungen:
- EP-A1- 0 512 358
- EP-A2- 1 101 637
- DE-A1- 4 436 441
- DE-A1- 10 012 131
- DE-A1- 19 846 275
- US-A- 5 381 335

## Beschreibung

Die Erfindung betrifft ein vierrädriges Kraftfahrzeug, insbesondere einen Personenkraftwagen, mit einer Wankstabilisierungs-Vorrichtung in Form geteilter, jeweils einer Fahrzeug-Achse zugeordneter Stabilisatoren, deren Stabilisatorhälften jeweils mittels eines von einer elektronischen Steuereinheit unter Berücksichtigung der Querbeschleunigung und Fahrgeschwindigkeit sowie des Lenkwinkels des Kraftfahrzeugs geeignet angesteuerten elektrischen Stellmotors gegeneinander verdrehbar sind. Zum technischen Umfeld wird insbesondere auf die DE 198 46 275 A1 verwiesen.

Eine Wankstabilisierung, d.h. eine Reduzierung der rotatorischen Fahrzeugbewegungen um die Fzg.-Längsachse hat eine wesentliche Verbesserung des Fahrverhaltens und des Fahrkomforts zur Folge. Eine praktizierte Möglichkeit, die Wankbewegungen zu verringern, ist die Verwendung von Stabilisatoren. Bei einer gegensinnigen Einfederung der Fzg.-Räder, wie sie bei Kurvenfahrt auftritt, werden die Stabilisatoren tordiert. Auf diese Weise ergibt sich nach der Aufstellung der Kräfte- und Momentenbilanz ein Rückstellmoment, welches der Wankbewegung des Fzg.-Aufbaus entgegenwirkt. Bei einer gleichsinnigen Einfederung beider Räder einer Achse bleibt ein Stabilisator ohne Wirkung. Verursachen Straßenunebenheiten jedoch eine gegensinnige Vertikalbewegung der Räder einer Achse oder regen sie lediglich ein Rad einer Achse an, erhöht der dadurch verdrehte Stabilisator die resultierende Federsteifigkeit am Rad und verstärkt hierdurch eine an sich unerwünschte Kopierbewegung des Fzg.-Aufbaus, die insbesondere bei Geradeausfahrt des Fzg's deutlich spürbar ist.

Bekannt sind sog. aktive Stabilisatoren in einem Fahrzeug-Fahrwerk, wozu auf die eingangs bereits genannte DE 198 46 275 A1 verwiesen wird. Dabei sind die Stabilisatoren der Vorderachse und der Hinterachse des Kraftfahrzeugs bevorzugt mittig geteilt, wobei die so gebildeten Stabilisatorhälften einer Achse über einen Stellmotor miteinander verbunden sind, der diese "Hälften" gegeneinander tordieren bzw. verdrehen kann. Somit können die Stabilisatoren in einer Kurvenfahrt des Fahrzeugs ein der daraus resultierenden Wankbewegung des Fzg.-Aufbaus entgegenwirkendes Moment in den Fahrzeug-Aufbau einleiten. Günstigstenfalls kann eine Wankbewegung des Fzg.-Aufbaus im Falle einer Kurvenfahrt vollständig unterbunden werden, weshalb diese bekannten Systeme auch als Vorrichtung zur Wankstabilisierung bezeichnet werden.

Auf dem Markt befinden sich bereits Personenkraftwagen mit einer solchen Wankstabilisierungs-Vorrichtung, wobei der genannte Stellmotor ein Hydraulikmotor ist, dessen einander entgegenwirkende Hydraulikkammern durch geeignete Ansteuerung von Hydraulikventilen geeignet befüllt bzw. mit Druck beaufschlagt werden können, um das jeweils gewünschte Moment an die Stabilisatorhälften einer Fzg.-Achse anzulegen. Oben wurde bereits erwähnt, dass insbesondere bei einer Geradeaus-Fahrt des Kraftfahrzeugs eine sog. Kopierbewegung des Fzg.-Aufbaus im Hinblick auf einen guten Fahrkomfort minimiert werden sollte, weshalb in diesen Fällen ein verschwindendes Stabilisatormoment, also eine Entkopplung der Stabilisatorhälften bei einer durch Straßenunebenheiten verursachten einseitigen oder gegensinnigen Radeinfederung angestrebt wird. Diese Anforderung ist nun bei einer hydraulischen Wankstabilisierung systemimmanent ausreichend erfüllt, d.h. aufgrund der physikalischen Eigenschaften eines Hydrauliksystems sind die sog. "aktiven Stabilisatoren" bzw. die einer Achse zugeordneten Stabilisatorhälften für eine Geradeaus-Fahrt des Kraftfahrzeugs prinzipbedingt ausreichend entkoppelt.

Neben einem Hydraulikmotor kann als Stellmotor für einen sog. "aktiven Stabilisator" auch ein Elektromotor mit nachgeschaltetem Getriebe verwendet werden, wie dies in der bereits mehrfach genannten DE 198 46 275 A1 beschrieben ist. Ein elektrischer Stellmotor besitzt gegenüber einem hydraulischen Stellmotor diverse Vorteile, die in der genannten Schrift aufgeführt sind, und kann gut direkt von einer elektronischen Steuereinheit angesteuert werden, die - analog den bisherigen hydraulischen Stellmotoren - im Hinblick auf eine gewünschte Wankstabilisierung bei Kurvenfahrt neben dem Fzg.-Lenkwinkel die aktuelle Querbeschleunigung sowie die Fzg.-Fahrgeschwindigkeit berücksichtigt, so wie dies auch in der DE 198 46 275 A1 angegeben ist.

Es hat sich jedoch gezeigt, dass sich mit der Verwendung eines sog. elektromechanischen Aktuators, d.h. eines elektrischen Stellmotors mit nachgeschaltetem Getriebe, in einem aktiven Stabilisator gegenüber einem Hydraulikmotor eine stärkere Kopplung der Stabilisatorhälften ergibt, da diese über das Getriebe und den Elektromotor (des elektromechanischen Aktuators) quasi direkt miteinander verbunden sind. Dies führt dazu, dass sich insbesondere bei einer Geradeaus-Fahrt des Fahrzeugs - hierunter sollen auch Fahrten mit sehr geringem Lenkwinkel fallen, die praktisch keine Wankbewegung des Fzg.-Aufbaus hervorrufen würden - im Falle einer Vertikalbewegung eines Fahrzeug-Rades nur einer Fahrzeugseite (d.h. einem einseitigen Ein- bzw. Ausfedern) oder einer gegensinnigen Vertikalbewegung der Räder einer Achse eine relativ stark spürbare sog. Kopierbewegung des Fzg.-Aufbaus ergibt, was grundsätzlich unerwünscht ist.

Für ein vierrädriges Kraftfahrzeug nach dem Oberbegriff des Anspruchs 1 eine Abhilfemaßnahme für diese geschilderte Problematik aufzuzeigen, ist Aufgabe der vorliegenden Erfindung.

Die Lösung dieser Aufgabe ist dadurch gekennzeichnet, dass zusätzlich Höhenstandsignale der einzelnen Räder gegenüber dem Fahrzeug-Aufbau berücksichtigt werden, derart, dass im Falle einer durch eine Straßenunebenheit angeregten Relativbewegung eines Rades in Vertikalrichtung die diesem Rad zugeordnete Stabilisatorhälfte durch den Stellmotor der genannten Rad-Bewegung zumindest teilweise nachgeführt wird. Vorteilhafte Aus- und Weiterbildungen sind Inhalt der Unteransprüche.

Es wurde erkannt, dass zur Erzielung eines Fahrkomforts ähnlich dem des hydraulischen Systems, bei welchem der Stellmotor als Hydraulikmotor ausgebildet ist und die Hälften des "aktiven Stabilisators" systembedingt ausreichend voneinander entkoppelt sind, im Falle eines elektromechanischen Aktuators der elektrische Stellmotor die zugeordneten Stabilisatorhälften bspw. auch bei einer Geradeausfahrt (oder dgl.) des Kraftfahrzeugs aktiv verdrehen sollte, wenn eines der Fzg.-Räder ein- oder ausfedert, d.h. eine Relativbewegung gegenüber dem Fzg.-Aufbau in Vertikalrichtung ausführt, oder wenn die Räder einer Achse eine gegensinnige Bewegung in Vertikalrichtung ausführen. Dies tritt nämlich immer dann auf, wenn derartige Relativbewegungen durch Straßenunebenheiten hervorgerufen werden. Zumindest sollte dieses aktive Verdrehen in denjenigen Frequenzbereichen der Radbewegung in Vertikalrichtung durchgeführt werden, in denen der genannte elektromechanische Aktuator (d.h. der elektrische Stellmotor mit nachgeschaltetem Getriebe) die zugeordneten Stabilisatorhälften nicht ausreichend voneinander entkoppelt. Dabei mag es durchaus gewisse Frequenzbereiche in einer Vertikalbewegung eines Rades gegenüber dem Fzg.-Aufbau geben, in denen keine Nachführung der einem Rad zugeordneten Stabilisatorhälfte durch den elektrischen Stellmotor durchgeführt werden muss oder durchgeführt wird.

Aus regelungstechnischer Sicht handelt es sich bei den Verdrehungen der Stabilisatoren, die aus den durch Straßenunebenheiten verursachten Vertikalbewegungen der Fzg.-Räder resultieren, um Störgrößen, die ein unerwünschtes Stabilisatormoment erzeugen. Die Erzielung eines guten Störverhaltens ist somit gleichbedeutend mit der Erzielung einer geringen Kopierbewegung des Fahrzeugaufbaus bzw. eines guten Fahrkomforts, nämlich dann wenn die Erzeugung dieses unerwünschten Momentes im wesentlichen vermieden wird. Im Idealfall kann hierzu die jeweils betroffene Stabilisatorhälfte der Vertikalbewegung des zugehörigen Rades nachgeführt werden, um bspw. bzw. insbesondere bei Geradeaus-Fahrt (bzw. im wesentlichen Geradeaus-Fahrt) des Fahrzeugs wie gewünscht einen bevorzugt momentenfreien Stabilisator zu erhalten. Dabei kann durch eine Messung und Verarbeitung der Höhenstände sowie durch eine gezielte Störgrößenaufschaltung eine deutliche Verbesserung des Störverhaltens des geschlossenen elektronischen Regelkreises erzielt werden. Konkret werden aus den sog. Höhenstandsignalen der Fahrzeug-Räder, d.h. den Informationen darüber, in welchen Vertikalpositionen sich die jeweiligen Räder bezogen auf den Fzg.-Aufbau befinden, die Störgrößen, also die daraus resultierenden Verdrehungen der Stabilisatoren, berechnet.

In anderen Worten ausgedrückt liefert das Höhenstandsignal jedes Fzg.-Rades eine Information darüber, in welcher Position sich dieses Rad aktuell gegenüber dem Fzg.-Aufbau befindet. Insbesondere im Falle einer einseitigen Vertikalbewegung oder einer gegensinnigen Vertikalbewegung der Fzg.-Räder einer Achse trotz oder bei Geradeaus-Fahrt des Fahrzeugs (oder auch bei nur geringen bzw. minimalen Fzg.-Lenkwinkeln) soll nun verhindert werden, dass der Fzg.-Aufbau ausgelöst durch den Stabilisator dieser Bewegung nachfolgt. Erfindungsgemäß wird daher die diesem Rad zugeordnete Stabilisatorhälfte dieser Rad-Vertikalbewegung nachgeführt, und zwar veranlasst durch den Stellmotor, der hierzu geeignet von einer elektronischen Steuereinheit angesteuert wird, die dazu neben anderen Größen die Höhenstandsignale der einzelnen Fahrzeugräder auswertet. Wie bereits erwähnt kann dabei die Ansteuerung des Stellmotors (der Fzg.-Vorderachse bzw. der Fzg.-Hinterachse) so erfolgen, dass die jeweils betroffene Stabilisatorhälfte dem zugehörigen Rad bzw. dessen Vertikalbewegung derart nachgeführt wird, dass durch diesen Stabilisator im wesentlichen kein Moment in den Fzg.-Aufbau eingeleitet wird.

Selbstverständlich ist die Berücksichtigung von Höhenstandsignalen einzelner Räder in Fahrwerk-Regelsystemen von Kraftfahrzeugen bereits bekannt, wozu lediglich beispielhalber auf die US 4,838,574 verwiesen wird, jedoch gibt es bislang noch keine Berücksichtigung in einem Fahrwerk-Regelsystem nach dem Oberbegriff des Anspruchs 1 der vorliegenden Erfindung.

Neben der bislang beschriebenen Messung und (regelungstechnischen) Aufschaltung der einzelnen Höhenstände der Fzg-Räder an der Vorderachse sowie an der Hinterachse auf die zugehörigen elektromechanischen Aktuatoren, d.h. auf den Stellmotor der Vorderachse bzw. der Hinterachse, ist auch ein Konzept möglich, nach welchem die Informationen der Rad-Höhenstandsensoren an der Vorderachse insbesondere in Verbindung mit weiteren gemessenen Fahrzeuggrößen (und hier insbesondere der Fahrzeuggeschwindigkeit, ggf. zusätzlich dem Lenkwinkel) verwendet werden, um an der Hinterachse eine sog. voreilende Information über die sich (in Kürze) ergebenden Höhenstände zu erhalten und somit das Störverhalten an der Hinterachse zu verbessern. In anderen Worten ausgedrückt wird dann aus der Information über die Rad-Höhenstände an der Fahrzeug-Vorderachse unter Berücksichtigung insbesondere der Fahrzeug-Geschwindigkeit eine vorauseilende Information über die jeweiligen Rad-Höhenstände an der Fahrzeug-Hinterachse gewonnen, so dass die Stabilisatorhälften der Hinterachs-Räder im Hinblick hierauf durch den Stellmotor geeignet geführt werden können, und zwar praktisch gleichzeitig mit der dann aufgrund einer Straßenunebenheit oder dgl. ausgeführten Vertikalbewegung des jeweiligen Fzg.-Hinterrades.

In vergleichbarer Weise kann im Sinne einer vorteilhaften Weiterbildung der Erfindung auch ein voreilendes Querbeschleunigungs-Signal ermittelt werden. Grundsätzlich kann zwar das bei einer Kurvenfahrt zur Stabilisierung des Fzg.-Aufbaus aufzubringende Stabilisatormoment in Abhängigkeit von der gemessenen Fahrzeugquerbeschleunigung bestimmt werden. Da jedoch zu jedem Zeitpunkt das aktiv gestellte Stabilisator-Moment proportional und entgegengesetzt zum passiven Wankmoment sein soll, müssen die Phasenverzögerungen des Gesamt-Systems kompensiert werden. Diese Phasenverzögerungen setzen sich stets aus einem durch die Trägheit der verwendeten Aktuatorik bestimmten Anteil und einem durch die benötigte Filterung der mit Messrauschen behafteten Eingangssignale bestimmten Anteil zusammen. Hierzu kann nun in der Funktions- bzw. Steuerungslogik mit einem sog. Querbeschleunigungsbeobachter ein der gemessenen Fahrzeugquerbeschleunigung voreilendes Signal berechnet werden, wobei darauf hingewiesen sei, dass ein solches voreilendes Querbeschleunigungssignal in der Fahrwerk-Regelung von Kraftfahrzeugen bereits grundsätzlich bekannt ist, und zwar bspw. aus der DE 44 36 441 C2 bzw. aus der DE 41 26 078 A1.

Vorteilhaft kann hierzu neben dem gemessenen Querbeschleunigungssignal eine Kombination aus Lenkwinkel und Fahrzeuggeschwindigkeit verwendet werden, da diese Informationen der tatsächlichen Querbeschleunigung zeitlich stets vorauseilen. Problematisch ist hierbei, dass die in einem Beobachter durchgeführte Berechnung der Querbeschleunigung aus dem Lenkwinkel stets von der Güte des zugrundeliegenden Modells abhängt. Aufgrund der notwendigen Vereinfachungen bei der Verwendung numerisch effektiv berechenbarer Modelle sind große Fehler insbesondere im querdynamischen Grenzbereich, gekennzeichnet durch hohe Werte der Querbeschleunigung, nicht auszuschließen.

Bei direkter Anwendung des literaturbekannten Beobachteransatzes mit konstanten Werten der Rückführverstärkungen auf das hier vorliegende Problem der Querbeschleunigungsbestimmung mit Hilfe der genannten Eingangsgrößen ergibt sich der folgend aufgezeigte, funktionseinschränkende Zielkonflikt. Aufgrund des im Vergleich zur Lenkwinkel- und Geschwindigkeitsmessung relativ hohen Rauschanteils der Querbeschleunigungsmessung werden bei der Beobachterauslegung kleine Werte der Rückführverstärkungen angestrebt, um eine möglichst gute Unterdrückung dieses Rauschanteils im resultierenden voreilenden Querbeschleunigungssignal zu erzielen. Andererseits können jedoch nur mit hohen Werten dieser Rückführverstärkungen große Modellfehler bei der beobachterinternen Auswertung des Lenkwinkelsignals vermieden werden.

Als vorteilhafte Weiterbildung des literaturbekannten Beobachteransatzes wird hier eine geeignete nichtlineare Gestaltung der Rückführungen vorgeschlagen, so dass im Bereich niedriger Querbeschleunigungen kleine Verstärkungswerte verwendet werden, die in Abhängigkeit von der Querbeschleunigung geeignet zunehmen. Hierdurch kann einerseits gewährleistet werden, dass im komfortbestimmenden Bereich um die Geradeausfahrt die benötigte gute Rauschunterdrückung erzielt wird, andererseits können jedoch auch im kaum komfortrelevanten querdynamischen Grenzbereich ausreichend geringe Fehler bei der modellgestützten Querbeschleunigungsberechnung erzielt werden.

Bevorzugte Eingangsgrößen des Systems zur Berechnung der Stabilisatorsollmomente sind dann der Lenkwinkel, die Fahrzeuggeschwindigkeit und die Querbeschleunigung. Als zusätzliches Eingangssignal kann sinnvoll noch die Gierrate mitberücksichtigt werden, notwendig ist dieses Signal jedoch für die grundlegende Funktion nicht. Mit dem genannten Querbeschleunigungsbeobachter wird zunächst ein voreilendes Querbeschleunigungssignal ermittelt, und zwar auf Grundlage eines Einspurmodells, das um zwei Zustände erweitert ist, mit deren Hilfe stationäre Genauigkeit des berechneten voreilenden Querbeschleunigungssignals sichergestellt werden kann.

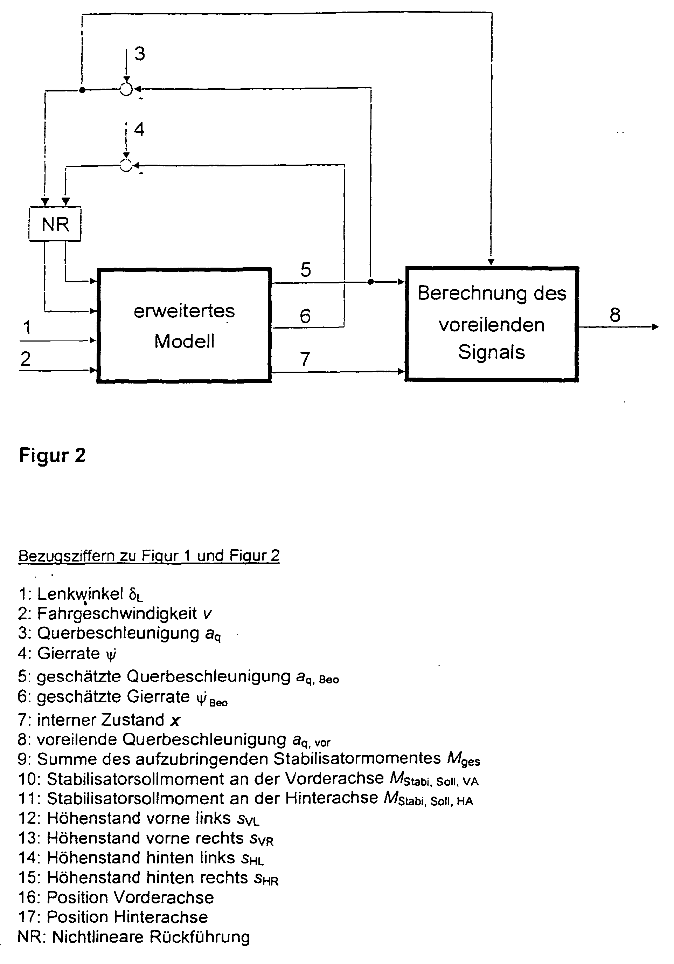

Zur weiteren Erläuterung dieser soeben geschilderten Weiterbildung der Erfindung wird auf die beigefügte **Figur 2** verwiesen. Die Eingänge des erweiterten Einspur-Modells bilden - wie bereits erwähnt wurde - dabei der Lenkwinkel δ_{L} (Bezugsziffer 1), die Fahrzeuggeschwindigkeit *v* (Bezugsziffer 2) und die mit einer von der Querbeschleunigung *a*_{q} (Bezugsziffer 3) abhängigen Verstärkung multiplizierten Differenzen (*a*_{q} - *a*_{q,Beo}) sowie (ψ̇-ψ̇_{*Beo*}). Dabei steht *"a*_{q,Beo}" für die geschätzte Querbeschleunigung (Bezugsziffer 5) und "ψ̇_{Beo}" für die geschätzte Gierrate (Bezugsziffer 6), während mit "ψ̇" die Gierrate (Bezugsziffer 4) des Fahrzeugs bezeichnet ist. Diese genannten Differenzen, multipliziert mit der Verstärkung bilden somit für das erweiterte Modell eine sog "Nichtlineare Rückführung" (Bezugszeichen NR). Mit dem Buchstaben "x" bzw. mit der Bezugsziffer 7 ist ein interner Zustandsvektor bezeichnet, der ebenso wie die geschätzte Querbeschleunigung aq,_{Beo} eine Ausgangsgröße des erweiterten Einspurmodells ist. Aus dieser geschätzten Querbeschleunigung aq,_{Beo}, aus der Differenz (aq - aq,_{Beo}) und aus dem sich ergebenden internen Zustand x wird das voreilende Querbeschleunigungssignal *a*_{q,vor} (Bezugsziffer 8) in Echtzeit durch geeignet gewichtete Summation ermittelt.

Bei der Ausgestaltung der Rückführverstärkungskennlinien in der besagten Nichtlinearen Rückführung NR kann in Erweiterung dieses Ansatzes neben der Abhängigkeit von der Größe der Querbeschleunigung *a*_{q} eine weitere Abhängigkeit von der Differenz (*a*_{q} - *a*_{q,Beo}) vorgesehen werden, wodurch in erwünschter Weise eine weitere Verringerung der resultierenden Modellfehler erzielt werden kann. In eben derselben Weise können bei der abschließenden Berechnung der voreilenden Querbeschleunigung *a*_{q,vor} durch gewichtete Summation statt konstanter Gewichte geeignete querbeschleunigungsabhängige Nichtlinearitäten vorgesehen werden, durch die eine fahrsituationsabhängig richtige Einstellung des Ausmaßes der Phasenvoreilung erzielt werden kann.

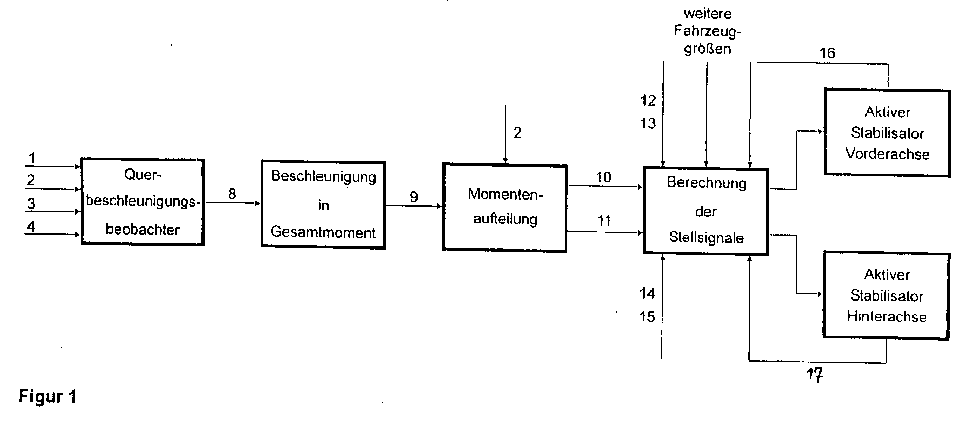

In Abhängigkeit von fahrzeugspezifischen Parametern kann dann eine Umrechnung in ein insgesamt, d.h. an der Vorderachse sowie an der Hinterachse des Kraftfahrzeugs aufzubringendes Stabilisatormoment erfolgen, welches in der beigefügten **Figur 1** mit der Bezugsziffer 9 bezeichnet ist. Diese **Figur 1** zeigt ein Blockschaltbild zur erfindungsgemäßen Ermittlung der Stellsignale entsprechend obigen Erläuterungen, wobei die verwendeten Bezugsziffern in den beiden Figuren einheitlich verwendet sind und auf dem Zeichnungsblatt der **Figur 2** nochmals aufgelistet sind.

Nun auf **Figur 1** Bezug nehmend ist also zunächst ein sog. Querbeschleunigungsbeobachter vorgesehen, der anhand von **Figur 2** und den vorangegangenen Ausführungen bereits erläutert wurde. Dessen Ausgangsgröße ist ein mit der Bezugsziffer 8 bezeichnetes Signal für die voreilende Querbeschleunigung *a*_{q,vor}. Anhand derer wird das an der Vorderachse sowie an der Hinterachse des Kraftfahrzeugs aufzubringende Stabilisatormoment 9 zur Erzielung einer eingangs geschilderten Wankstabilisierung bestimmt. Dieses sog. Gesamtmoment kann dann anschließend auf die beiden Achsen des Kraftfahrzeugs geeignet verteilt werden, und zwar bevorzugt in Abhängigkeit von der Fahrzeuggeschwindigkeit. Bevorzugt wird dabei das Verhältnis zwischen dem vom Vorderachs-Stellmotor aufzubringenden Stabilisator-Sollmoment der Vorderachse (Bezugsziffer 10) und dem vom Hinterachs-Stellmotor aufzubringenden Stabilisator-Sollmoment der Hinterachse (Bezugsziffer 11) mit steigender Fzg.-Fahr-Geschwindigkeit vergrößert. Dies führt bei geringen Fahrgeschwindigkeiten zu einer hohen Lenkwilligkeit des Fahrzeugs und bei hohen Fahrgeschwindigkeiten zu einem untersteuernden, gut beherrschbaren Fahrzeug.

Wie weiter oben ausführlich erläutert wurde, werden auch noch die Höhenstandsignale der einzelnen Räder des Fahrzeugs berücksichtigt. Diese mit den Bezugsziffern 12, 13, 14, 15 bezeichneten Höhenstandsignale für die Räder der Vorderachse (V) bzw. der Hinterachse (H) jeweils links (L) bzw. rechts (R) sind laut Bezugszeichenliste als Signal S_{VL} für den Höhenstand vorne links, S_{VR} für den Höhenstand vorne rechts, sHL für den Höhenstand hinten links, und S_{HR} für den Höhenstand hinten rechts bezeichnet. Diese Berücksichtigung der Höhenstandsignale 12, 13, 14, 15 erfolgt erfindungsgemäß, um im Falle einer durch eine Straßenunebenheit angeregten Relativbewegung eines Rades in Vertikalrichtung die diesem Rad zugeordnete Stabilisatorhälfte durch den zugehörigen Stellmotor der genannten Rad-Bewegung zumindest teilweise nachführen zu können. Dementsprechend erfolgt also die Berechnung der Stellsignale für den sog. aktiven Stabilisator der Fzg-Vorderachse bzw. der Fzg.-Hinterachse, wobei mit dem Begriff "aktiver Stabilisator" ein geteilter Stabilisator wie im Oberbegriff des Anspruchs 1 angegeben bezeichnet ist, d.h. ein geteilter Stabilisator, dessen Stabilisatorhälften mittels eines Stellmotors gegeneinander verdrehbar sind.

In die besagte Berechnung der Stellsignale für die aktiven Stabilisatoren bzw. deren Stellmotore gehen also nicht nur die an der Fzg.-Vorderachse bzw. an der Fzg.-Hinterachse aufzubringenden Momente für die Wankstabilisierung (als Stabilisatormoment 10 bzw. 11 bezeichnet) ein, sondern erfindungsgemäß auch die Höhenstandsignale 12, 13, 14, 15 der einzelnen Fzg.-Räder, um in der beschriebenen Weise - insbesondere als Störgrößen - berücksichtigt zu werden. Im Hinblick auf die weiter oben ebenfalls bereits geschilderte voreilende "Störgrößen-Berücksichtigung" für die Fzg.-Hinterachse können dabei - wie in **Fig.1** angegeben und weiter oben erläutert - noch weitere Fzg.-Größen, insbesondere die Fahrgeschwindigkeit, Berücksichtigung finden, wobei noch darauf hingewiesen sei, dass durchaus eine Vielzahl von Details auch abweichend von obigen Erläuterungen gestaltet sein kann, ohne den Inhalt der Patentansprüche zu verlassen.

## Patentansprüche

1. Vierrädriges Kraftfahrzeug, insbesondere Personenkraftwagen, mit einer Wankstabilisierungs-Vorrichtung in Form geteilter, jeweils einer Fahrzeug-Achse zugeordneter Stabilisatoren, deren Stabilisatorhälften jeweils mittels eines von einer elektronischen Steuereinheit unter Berücksichtigung der Querbeschleunigung und Fahrgeschwindigkeit sowie des Lenkwinkels der Kraftfahrzeugs geeignet angesteuerten elektrischen Stellmotors gegeneinander verdrehbar sind,
**dadurch gekennzeichnet, dass** zusätzlich Höhenstandsignale der einzelnen Räder gegenüber dem Fahrzeug-Aufbau berücksichtigt werden, derart, dass im Falle einer durch Straßenunebenheiten angeregten Relativbewegung eines Rades in Vertikalrichtung die diesem Rad zugeordnete Stabilisatorhälfte durch den Stellmotor der genannten Rad-Bewegung zumindest teilweise nachgeführt wird.

2. Kraftfahrzeug nach Anspruch 1,
**dadurch gekennzeichnet, dass** die Stabilisatorhälfte derart nachgeführt wird, dass durch diese im wesentlichen kein durch eine Straßenunebenheit verursachtes Moment in die zugehörige Radaufhängung eingeleitet wird.

3. Kraftfahrzeug nach Anspruch 1 oder 2,
**dadurch gekennzeichnet, dass** die Nachführung der Stabilisatorhälfte nur in bestimmten Frequenzbereichen der Radbewegung in Vertikalrichtung durchgeführt wird.

4. Kraftfahrzeug nach einem der vorangegangenen Ansprüche,
**dadurch gekennzeichnet, dass** aus der Information über die Rad-Höhenstände an der Fahrzeug-Vorderachse unter Berücksichtigung insbesondere der Fahrzeug-Geschwindigkeit eine voreilende Information über die jeweiligen Rad-Höhenstände an der Fahrzeug-Hinterachse gewonnen wird und die Stabilisatorhälften der Hinterachs-Räder im Hinblick hierauf durch den Stellmotor geeignet geführt werden.

5. Kraftfahrzeug nach einem der vorangegangenen Ansprüche,
**dadurch gekennzeichnet, dass** aus einem die aktuelle Querbeschleunigung wiedergebenden Signal unter Berücksichtigung des Lenkwinkels und der Fahrzeug-Geschwindigkeit und der Gierrate ein voreilendes Querbeschleunigungs-Signal ermittelt wird.

6. Kraftfahrzeug nach Anspruch 5,
**dadurch gekennzeichnet, dass** aus dem voreilenden Querbeschleunigungs-Signal ein für die Vorderachse und die Hinterachse des Fahrzeugs benötigtes Gesamtmoment für eine Wankstabilisierung ermittelt wird, wobei die Aufteilung dieses Gesamtmoments auf den dem Vorderachs-Stabilisator zugeordneten Stellmotor und den dem Hinterachs-Stabilisator zugeordneten Stellmotor unter Berücksichtigung der aktuellen Fahrzeug-Geschwindigkeit erfolgt.

## Claims

1. A four-wheel motor vehicle, especially a passenger car, comprising an anti-roll device in the form of divided stabilisers associated with the respective axles, the half-stabilisers each being rotatable by an electric servomotor actuated in suitable manner by an electronic control unit so as to allow for the transverse acceleration and the speed and steering angle of the vehicle,
**characterised in that** account is also taken of signals giving the level of the individual wheels relative to the vehicle body, so that in the event of relative vertical movement of the wheel due to bumps in the road, the half-stabiliser associated with the wheel is at least partly guided or compensated by the servomotor or the said wheel movement.

2. A vehicle according to claim 1, **characterised in that** the half-stabilisers are guided so that substantially no torque caused by a bumpy road is introduced via the stabilisers into the associated wheel suspension.

3. A vehicle according to claim 1 or 2, **characterised in that** the half-stabilisers are guided in the vertical direction only at given frequency ranges of the wheel suspension.

4. A vehicle according to any of the preceding claims, **characterised in that** advance information about the respective wheel levels on the rear axle of the vehicle is obtained from information about the level of the wheels on the front axle, with special allowance for the speed, and the half-stabilisers for the rear wheels are guided accordingly by the servomotor.

5. A vehicle according to any of the preceding claims, **characterised in that** an advance transverse acceleration signal is obtained from a signal indicating the instantaneous transverse acceleration, allowing for the steering angle, the speed and the yawing rate.

6. A vehicle according to claim 5, **characterised in that** the advance transverse acceleration signal is used to obtain a total torque required for the front axle and the rear axle in order to counteract the roll, wherein the total torque is divided between the servomotor associated with the front axle stabiliser and the servomotor associated with the rear axle stabiliser, allowing for the instantaneous speed of the vehicle.

## Revendications

1. Véhicule à quatre roues, en particulier voiture particulière, comportant un dispositif de stabilisation du roulis en forme de stabilisateurs en deux parties associés respectivement à un essieu du véhicule, dont les moitiés de stabilisateur peuvent pivoter l'une par rapport à l'autre au moyen d'un servomoteur électrique commandé de façon appropriée par une unité de commande électronique compte tenu de l'accélération transversale et de la vitesse de roulage ainsi que de l'angle de braquage du véhicule,
**caractérisé en ce qu'**
on tient compte, en complément, de signaux de hauteur des différentes roues par rapport à la carrosserie du véhicule de manière à ce que, dans le cas d'un mouvement relatif d'une roue dans le sens vertical provoqué par des déformations de la chaussée, la moitié de stabilisateur associée à cette roue puisse être asservie, du moins en partie, par le servomoteur du mouvement de roue indiqué.

2. Véhicule à moteur selon la revendication 1,
**caractérisé en ce que**
la moitié de stabilisateur est asservie de manière à ce qu'elle n'initie essentiellement pas de moment dans la suspension de roue correspondante provoqué par une déformation de la chaussée.

3. Véhicule à moteur selon la revendication 1 ou 2,
**caractérisé en ce que**
l'asservissement de la moitié de stabilisateur n'est réalisé que dans certains domaines de fréquence du mouvement de roue dans le sens vertical.

4. Véhicule selon l'une quelconque des revendications précédentes,
**caractérisé en ce qu'**
à partir de l'information sur les hauteurs de roue sur l'essieu avant du véhicule, on obtient une information en avance sur les hauteurs de roue respectives sur l'essieu arrière du véhicule compte tenu, en particulier, de la vitesse du véhicule, et les moitiés de stabilisateur des roues de l'essieu arrière sont asservies à ce sujet de manière appropriée par le servomoteur.

5. Véhicule selon l'une quelconque des revendications précédentes,
**caractérisé en ce qu'**
on détermine, à partir d'un signal reproduisant l'accélération transversale du moment, un signal d'accélération transversale en avance compte tenu de l'angle de braquage et de la vitesse du véhicule et du taux de lacet.

6. Véhicule selon la revendication 5,
**caractérisé en ce qu'**
on détermine, à partir du signal d'accélération transversale en avance, un moment total d'une stabilisation du roulis, nécessaire pour l'essieu avant et l'essieu arrière du véhicule, la répartition de ce moment total sur le servomoteur associé au stabilisateur de l'essieu avant et sur le servomoteur associé au stabilisateur de l'essieu arrière étant réalisée en tenant compte de la vitesse du moment du véhicule.
